# EUROPEAN PATENT APPLICATION

(11) **EP 1 850 227 A1**
(43) Date of publication of application: **31.10.2007**
(21) Application number: 06290712.6
(22) Date of filing: 28.04.2006
(51) Int. Cl.: G06F 9/46

(54) **Data processing system and metod for providing a status management service**

(71) Applicant: SAP AG, 69190 Walldorf (DE)
(72) Inventor: Rapp, Roman, 06270 Villeneuve Loubet (FR); Delvat, Julien, 06160 Antibes Juan les Pins (FR)
(74) Representative: Richardt, Markus Albert

(57) **Abstract**

The present invention relates to a data processing system having a service oriented architecture, the service oriented architecture comprising a plurality of foundation business objects and a dependent business object for providing a status management service for the plurality of foundation business objects

## Description

### Technical field

The present invention relates generally to data processing systems and methods, and more particularly to status management in a service oriented architecture.

### Background information

A service oriented architecture (SOA) is essentially a collection of data processing services. These services can communicate with each other. The communication can involve data passing and/or two or more services coordinating some activity or data processing task. Prior art SOAs have some connecting infrastructure to provide communication between the data processing services and coordination.

Examples of prior art SOAs include the Distributed Component Object Model (DCOM) that is based on the Common Object Request Broker Architecture (CORBA). A CORBA-based program can interoperate with any other CORBA-based program across multiple operating systems, programming languages and networks. DCOM is an extension of the Component Object Model (COM). DCOM is designed for use across multiple network transports, including Internet protocols such as HTTP. DCOM works with both Java Applets and activeX components through its use of the COM.

SAP's Enterprise Services Architecture (ESA) is another more recent service oriented architecture. ESA takes web services standards and services-oriented architecture principles and extends these to meet the needs of enterprise business solutions. It helps information technology (IT) organizations leverage existing systems to build and deploy flexible solutions that support end-to-end business scenarios across heterogeneous data processing systems.

The present invention aims to provide an improved data processing system, method and computer program product that facilitates the provision of a status management service in a service oriented architecture.

### Summary

In accordance with the present invention there is provided a data processing system having a service oriented architecture, the service oriented architecture comprising a plurality of foundation business objects and a dependent business object for providing the status management service for the plurality of foundation business objects.

Embodiments of the present invention are particularly advantageous as the provision of a central status management service is facilitated that can be used by multiple instances of various foundation business objects. In particular, embodiments of the present invention facilitate the reduction of the complexity of the foundation business objects as the foundation business objects do not need to include special status management program routines that are specific for the respective foundation business object. Such specific program routines are replaced by a generic status management service that is based on a dependent business object. For managing the status of a given instance of one of the foundation business objects an instance of the dependent business object is created that provides this status management service and interacts with this instance of the foundation business object.

In accordance with an embodiment of the invention the foundation business objects have an interface to the dependent business object. The interface comprises a first set of methods for interoperability of an instance of the respective foundation business object with its dependent instance of the dependent business object.

In accordance with an embodiment of the invention, the first set of methods comprises a first method for getting a status of the instantiated foundation business object from the instantiated dependent business object, a second method for setting the status of the instantiated foundation business object, and a third method for signaling that the status of the instantiated foundation business object has changed.

In accordance with an embodiment of the invention, the dependent business object comprises a second set of methods, the second set of methods comprising a first method for getting a default status of the instantiated foundation business object, a second method for getting the possible statuses of the instantiated foundation business object, a third method for getting the possible actions that can be performed on the instantiated foundation business object, a fourth method for checking if execution of a given action on the instantiated foundation business object is allowed, a fifth method for setting the status of the instantiated foundation business object, a sixth method for getting the status of the instantiated foundation business object, and a seventh method for saving the actual status of the instantiated foundation business object.

In accordance with an embodiment of the invention the data processing system comprises a configuration component for configuration of the status management service. The configuration component stores data that is descriptive of actions that can be performed on at least some of the foundation business objects.

In accordance with an embodiment of the invention allowed actions are specified for each status and allowed statuses are assigned to each foundation business object in the configuration component.

In accordance with an embodiment of the invention allowed actions that can be performed on an instantiated foundation business object are specified per foundation business object and depending on the status of the instantiated foundation business object.

In accordance with an embodiment of the invention the allowed actions that can be performed on an instantiated foundation business object are specified on a foundation business object key basis.

In accordance with an embodiment of the invention the data processing system has a volatile main memory for temporarily storing an actual status of an instantiated foundation business object. In response to a save command the actual status is persistently stored in a database of the data processing system.

In accordance with an embodiment of the invention allowed actions that can be performed on an instantiated foundation business object are obtained from the respective instantiated dependent business object before one of the allowed actions is executed by an application program.

In accordance with an embodiment of the invention the data processing system has a user interface for displaying the actual statuses of instantiated foundation business objects. The user interface may further comprise a context menu for showing allowed actions that can be executed with respect to a selected one of the instantiated foundation business objects.

In another aspect the present invention relates to a data processing method comprising a service oriented architecture, the service oriented architecture comprising a plurality of foundation business objects and a dependent business object for providing a status management service for the plurality of foundation business objects, the method comprising instantiation of one of the foundation business objects, initiation of the instantiation of the dependent business object by the instantiated one of the foundation business objects, and receiving a status by the instantiated one of the foundation business objects from the instantiated dependent business object.

In still another aspect the present invention relates to a computer readable medium for performing such a data processing.

It is to be understood that both the foregoing general description and the following detailed description are exemplary and explanatory only, and should not be considered restrictive of the scope of the invention, as described in the claims. Further, features and/or variations may be provided in addition to those set forth herein. For example, embodiments consistent with the present invention may be directed to various combinations and sub-combinations of the features described in the following detailed description.

### Brief description of the drawings

The accompanying drawings, which are incorporated in and constitute a part of the specification, illustrate embodiments of the invention and, together with the description, serve to explain advantages and principles of the invention. ln the drawings:
- Figure 1: is a block diagram of a data processing system that has a service oriented architecture for providing a status management service,
- Figure 2: is a class diagram illustrating foundation business objects having an
- Figure 3: interface to provide interoperability with a dependent business object that provides the status management service, illustrates the structure of the dependent business object,
- Figure 4: illustrates a first configuration of the status management service,
- Figure 5: illustrates a second configuration of the status management service,
- Figure 6: illustrates a third configuration of the status management service,
- Figure 7: is a flowchart illustrating an embodiment of a method of the
- Figure 8: invention, is a sequence diagram illustrating the assignment of a default status
- Figure 9: to an instantiated foundation business object by the status management service, is a sequence diagram illustrating the execution of a status change
- Figure 10: of an instantiated foundation business object using the status management service, is a sequence diagram illustrating communicating of allowed actions
- Figure 11: that can be performed on an instantiated foundation business object from the status management service, schematically shows a user interface for displaying of status
- Figure 12: information per instantiated foundation business object, schematically shows a user interface comprising a context menu.

### Description of the embodiments

The following detailed description refers to the accompanying drawings. Wherever possible, the same reference numbers are used in the drawings and the following description to refer to the same or similar parts. While serval exemplary embodiments and features of the invention are described herein, modifications, adaptations and other implementations are possible, without departing from the spirit and scope of the invention. For example, substitutions, additions, or modifications may be made to the components illustrated in the drawings, and the exemplary method described herein may be modified by substituting, reordering, or adding steps to the disclosed methods. Accordingly, the following detailed description does not limit the invention. Instead, the proper scope of the invention is defined by the appended claims.

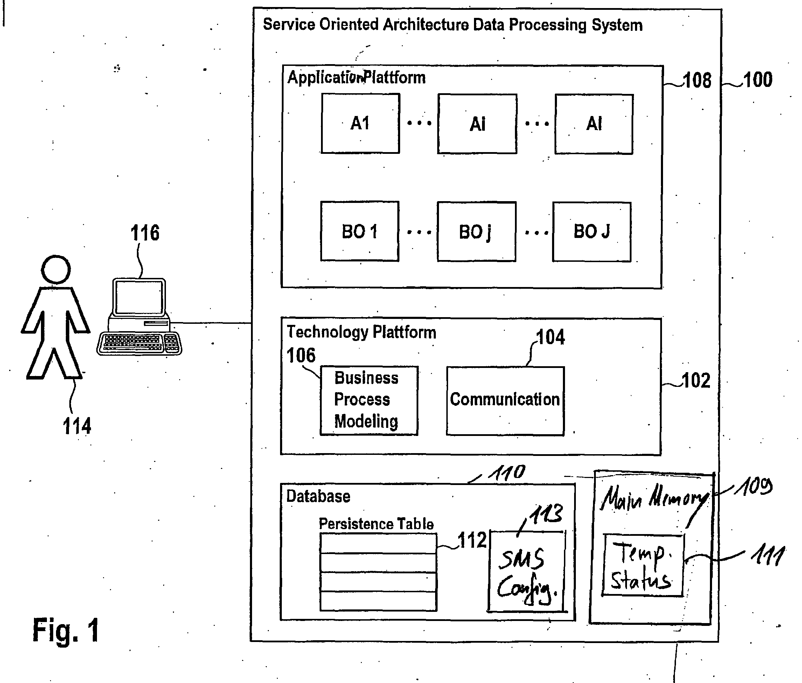

Fig. 1 shows a data processing system 100 that has a service oriented architecture such as SAP's Enterprise Services Architecture (ESA). The data processing system 100 can be physically distributed over a number of computer systems that are interconnected by one or more networks. Further, the various networked computer systems that constitute the data processing system 100 can use a number of different operating systems and programming languages.

The service oriented architecture has a technology platform 102 that provides the 'glue' in order to bind the various computer systems to form the data processing system 100. The technology platform 102 has a communication component 104 that enables the exchange of data across the various computer systems and networks. For example, the communication component 104 can be implemented by SAP's Exchange Infrastructure (XI).

The technology platform 102 has a business process modeling component 106. The business process modeling component 106 serves to coordinate the interchange of data in the service oriented architecture in accordance with certain business procedures. It can be implemented e.g. by means of the product ARIS that is commercially available from IDS Scheer. The service oriented architecture of the data processing system 100 has an application platform 108 that uses the infrastructure provided by the technology platform 102 and implements the business logic. The application platform 108 has an arbitrary number I of application programs A1, ..., Ai, ..., Al.

Further, the application platform 108 has an arbitrary number of J business objects B01, ..., BOj, ..., BOJ. Preferably, the business objects of the application platform 108 are implemented as SAP business objects. The services of SAP business objects describe complete elementary steps in business processes, such as making a purchase order, providing a product cost estimate, invoicing a customer for a service, etc. These services can be implemented as methods of BOs. The encapsulation of the description of a complete business process step in such a business object reduces complexity because the inner structure of the business object remains concealed. By invoking services of the business objects, the external applications A1, ..., Al can access and manipulate the business objects B01, ..., BOJ, e.g. via the Internet, SAP Exchange Infrastructure (XI), DCOM or CORBA.

While the individual business objects describe complete elementary steps in business processes, the business process modeling component 106 of the technology platform 102 can describe complex workflows that involve multiple business processes steps and thus respective business objects services.

For this embodiment of the invention two kinds of business objects are relevant: Foundation business objects and dependent business objects. By definition, an instantiated foundation business object is not dependent on any other business object or instance of a business object whereas, also by definition, an instantiated dependent business object has a dependency relationship with an instantiated foundation business object.

The data processing system 100 has at least one database 110. The database 110 can be a single physical database or it can be a distributed database that is implemented using multiple computer systems of the data processing system 100. The database 110 serves for storage of persistence tables 112 for storage of instances of business objects and events. This enables the interchange of asynchronous messages and auditing of the business processes.

Further, at least one of the persistence tables 112 serves for storage of the statuses of the instances of foundation business objects.

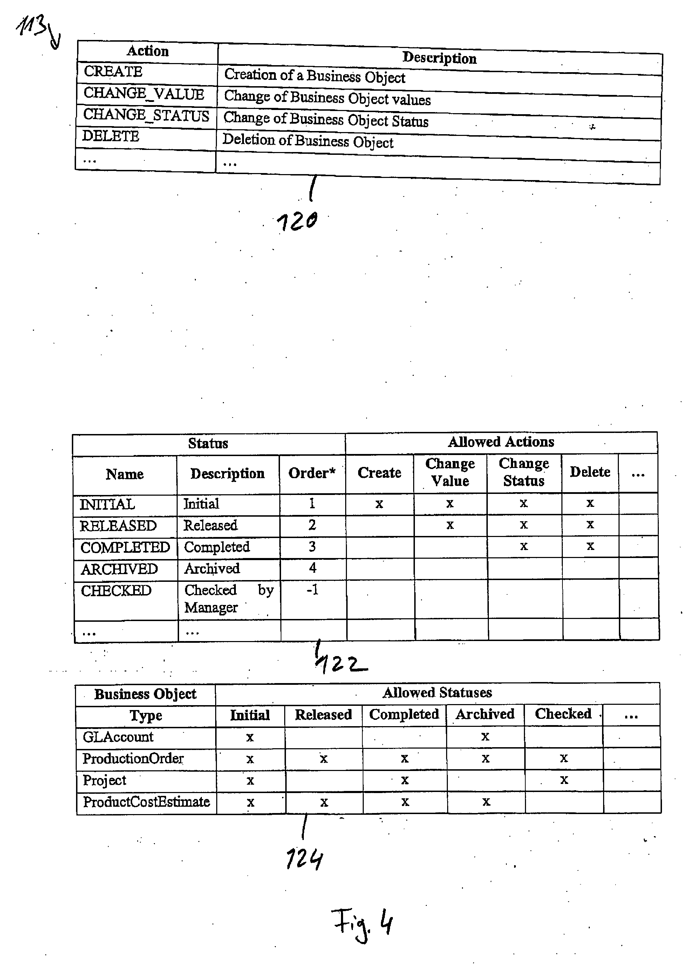

Further, one or more tables 113 are stored in the database 110 for storage of a configuration of the status management service (SMS). For example, the actions that can be performed on instances of foundation business objects, the statuses that at least some of the instances of the foundation business objects can take, and/or actions that can be performed on instantiated foundation business objects depending on status and/or foundation business object type and/or foundation business object keys are specified in the tables 113. Detailed examples for the structure and content of the tables 113 are given below in figs. 4, 5 and 6.

The data processing system 100 has a volatile main memory 109 for storing a temporary status 111 of an instantiated foundation business object that is currently being processed e.g. by one of the external applications. The temporary status 111 is the actual status of the respective instantiated foundation business object that is temporarily held in the main memory 109. After processing of the instantiated foundation business object is successfully completed a save command is received e.g. from the external application that has performed the processing such that the temporary status 111 is stored in the respective persistence table 112. For example, a respective status that has been previously stored in the persistence table 112 for that instantiated foundation business object is overwritten by the temporary status 111 in response to the save command. If execution of the external application is terminated unsuccessfully the temporary status 111 is not stored in the persistence table 112 but the original status is kept.

By way of example, fig. 1 shows a user 114 and his or her personal computer 116 that is coupled to the data processing system 100. Typically, the data processing system 100 has a large number of users depending on the size of the organization that runs the data processing system 100, such as hundreds, thousands or even hundreds of thousands users.

The user 114 is an employee that has to perform a certain action, item or task that requires usage of one or more of the external application programs of the application platform 108 and instantiation of one or more of the foundation business objects of the application platform 108.

For execution of the action item the user 114 enters data into his or her personal computer 116 for instantiating the respective foundation business object that implements the elementary business process for execution of the action item.

Alternatively one of the external application programs is invoked automatically and instantiates one or more of the foundation business objects without user interaction.

At least one of the business objects contained in the application platform 108 is not a foundation business object but a dependent business object. A service of a dependent business object does also describe an elementary business process step. However, the dependent business object differs from a foundation business object in that an instantiated dependent business object requires a dependency relationship to an instantiated foundation business object.

For example, the business object for making a production order is the business object BO1. In this instance the user 114 enters data into his or her personal computer 116 for instantiating the business object BO1. The instantiated business object BO1 initiates the instantiation of a dependent business object BOj that provides the status management service. After instantiation of the dependent business object BOj, the instantiated dependent business object executes the status management service as specified in the tables 113 in order to provide an initial status, to execute a status change and/or to communicate allowed actions that can be performed on the initiated foundation business object depending on its actual status.

lmplementing the steps of a status management process in a separate dependent business object has the advantage that no such status management process needs to be included into the various foundation business objects. This can substantially reduce the lines of code that are required for implementation of the foundation business objects.

Another advantage is increased flexibility. lf the status management process needs to be changed, only the dependent business object that provides the status management service and/or one of the tables 113 needs to be changed correspondingly but not the foundation business objects themselves.

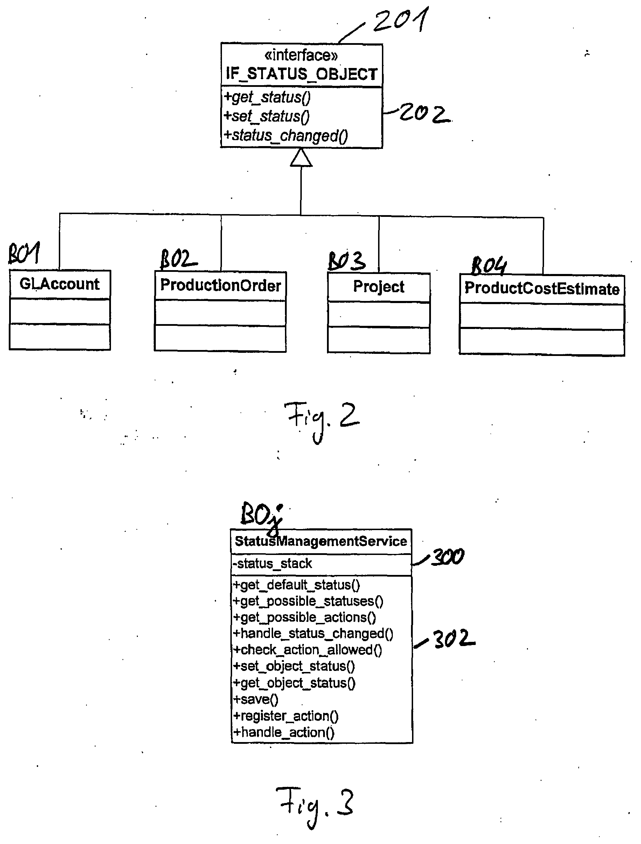

Fig. 2 schematically shows an interface 201 that is implemented by the foundation business objects in order to provide interoperability with the dependent business object BOj that provides the status management service. ln the embodiment considered here there are foundation business objects BO1 'general ledger (GL) account', BO2 'production order', BO3 'project', BO4 'product cost estimate',...

The interface 201 contains a number of methods 202 such as the method 'get status' for getting a status of the respective instantiated foundation business object, 'set status' for setting an updated status and 'status changed' for signaling that the status has been changed.

Fig. 3 schematically shows the structure of the dependent business object BOj that provides the status management service, if instantiated. The business object BOj has a header 300 that contains a status stack and a body 302 that contains various methods and class methods: get default status, get possible statuses, get possible actions, handle status changed, check action allowed, set object status, get object status, save, register action, and handle action.

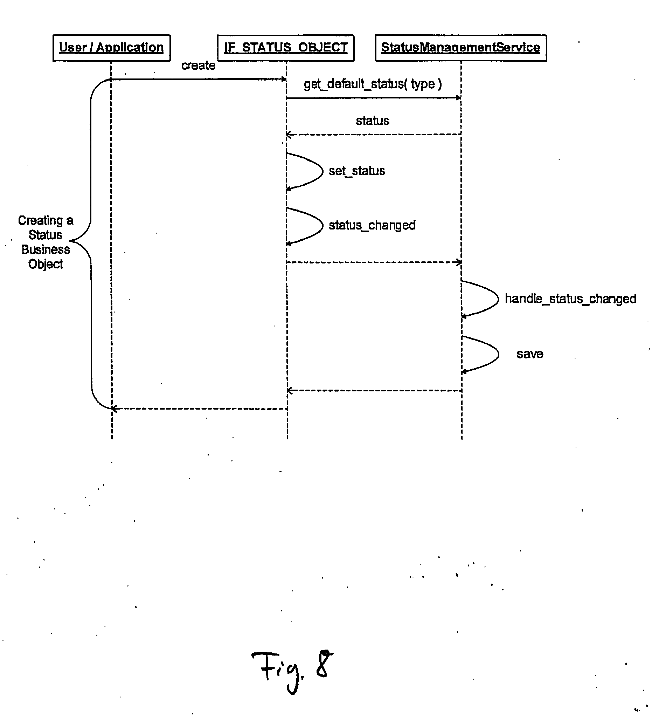

The difference between a method and a class method is that a method can be called after instantiation and a class method can be called before instantiation of the dependent business object. The functionalities of these methods and class methods will be explained in more detail below with reference to figs. 8, 9 and 10.

Fig. 4 shows a more detailed example of an implementation of the tables 113 that configure the status management service (cf. tables 113 of fig. 1). In the embodiment considered here the status management service is configured by three tables 120, 122 and 124. The table 120 contains a definition of the actions that can be performed on at least some of the foundation business objects. This may comprise the action 'create' for creation of a new instance of a foundation business object, 'change value' for changing one or more values of an instantiated foundation business object, 'change status' for changing the status of an instantiated foundation business object, and 'delete' for deletion of an instantiated foundation business object, etc.

Table 122 contains a definition of the statuses that can be taken by at least some of the foundation business objects. A set of allowed actions is assigned to each of the statuses in order to specify the actions that can be performed on an instantiated foundation business object if it is in that status.

The allowed actions create, change value, change status and delete are assigned to the status initial, the allowed actions change value, change status and delete are assigned to the status released, the allowed actions change status and delete are assigned to the status completed. No allowed actions are assigned to the statuses archived and checked.

In addition, the table 122 specifies the order in which an instantiated foundation business object can transition from one of the defined statuses to another. In the embodiment considered here this order is as follows: 1=initial, 2=released, 3=completed, 4=archived. In other words, an instantiated foundation business object can transition from initial to released to completed and finally to archived only in this specified order. The status checked has no order which is indicated by order=-1 in the table 122. This means that the status checked can be taken by an instantiated foundation business object independently from the other defined statuses.

The table 124 specifies the allowed statuses for each of the foundation business objects. An instance of the foundation business object GL account can take one of the allowed statuses initial or archived. An instance of the foundation business object production order can take one of the allowed statuses initial, released, completed, archived or checked. An instance of the foundation business object project can take one of the allowed statuses initial, completed or checked. An instance of the foundation business object product cost estimate can take one of the allowed statuses initial, released, completed, archived. In conjunction with the table 122 this means that, for example, and instance of the foundation business object project can transition from initial to completed to checked in accordance with the order specified in the table 122 leaving out those statuses that are not allowed for the considered foundation business object.

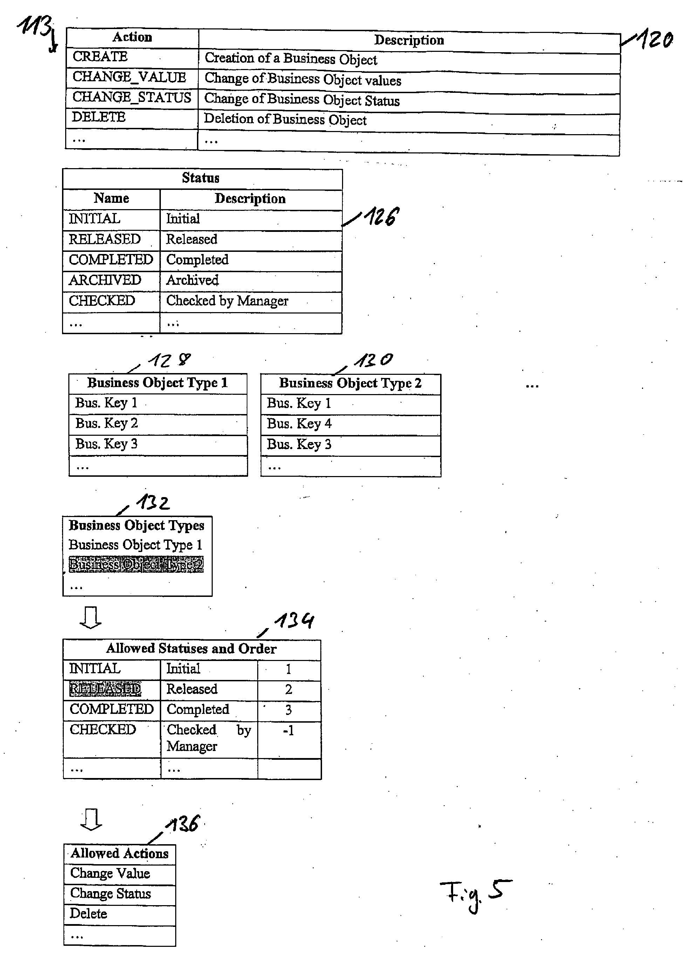

Fig. 5 shows another implementation of the tables 113 for specifying the status management service. In the embodiment considered here the status management service is configured by the table 120 (cf. fig. 4) and by the tables 126, 128, 130, 132, 134 and 136. The table 126 specifies the statuses that at least some of the foundation business objects can take without assigning allowed actions and without specifying an order which is in contrast to the table 122 in the implementation considered with respect fig. 4. The configuration of the status management service is implemented here depending on business object types: the table 128 contains a list of business object keys for a given foundation business object of type 1, such as B01. Likewise the table 130 contains such a list for B02.

The table 132 contains a list of the business object types. Each entry into the table 132 points to a specific table that is assigned to that entry. For example, the table 134 is assigned to the entry 'business object type 2' of the table 132. The table 134 specifies the allowed statuses and the order of the statuses with respect to that business object type 2.

A separate table is assigned to each of the statuses specified in these specific tables, e.g. table 134. For example the entry into the table 134 for the status released points to a table 136 that contains the allowed actions that can be performed on an instantiated foundation business object of the business object type 2, if it has the status released.

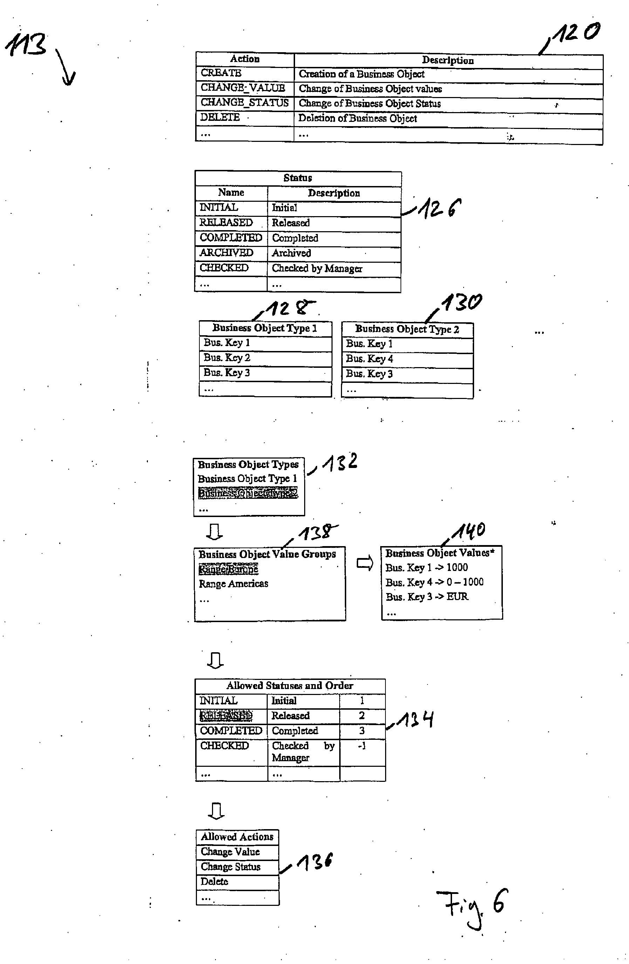

Fig. 6 shows still another implementation of the tables 113. In the embodiment considered here the configuration of the status management service is made dependent on business object keys. The tables 120, 126, 128, 130, 132, 134 and 136 are identical or similar to the implementation considered with respect to fig. 5 with the exception of the table 132 that is not directly linked to the table 134 but to a table 138 that specifies business object value groups on a per business object type basis. The table 138 points to respective business object values where a business object value can be defined as a single value or a range or exception values or exception ranges.

This implementation is advantageous for applications that require a configuration depending on the business object keys rather than on the business type. For example, the statuses initial, released, completed and checked are allowed for the business object type with respect to the value range 'Europe'. For status released, only actions change value, change status and delete are allowed.

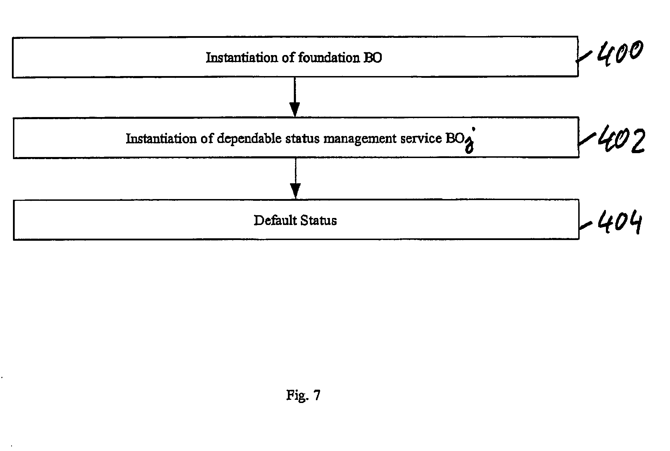

Fig. 7 shows a flowchart illustrating an embodiment of a method of the invention. In step 400 one of the foundation business objects is instantiated automatically or by involving some degree of user interaction. In order to provide a status management service for the instantiated foundation business object the dependent business object BOj is instantiated in step 402. In response to a respective method call the instantiated dependent business object BOj provides the default status to the instantiated foundation business object in step 404.

Fig. 8 shows a sequence diagram illustrating a more detailed embodiment of the method of fig. 7 making reference to the methods as shown in figs. 2 and 3. The sequence diagram involves the objects 'user/application' (cf. user 114 and one of the applications of the application platform 108 of fig. 1), 'IF status object' (cf. interface 201 as shown in fig. 2) and 'status management service', i.e. an instance of the dependent business object BOj for providing the status management service as depicted in fig. 3.

When an instance of one of the foundation business objects is created, it gets a default status that defines the actions that can or cannot be performed on it. First, a user or application instantiates one of the foundation business objects, e.g. a production order for an existing product, including the respective IF status object interface 201. By means of the interface 201 the method get default status of the status management service is called in order to set an initial status by means of the method set status of the interface 201. This done, the instantiated foundation business object raises the status changed event by means of its interface 201. This event message triggers the status management service in order to handle that message with handle status changed. Finally the changed status is persistently saved in one of the persistence tables 112 (cf. fig. 1).

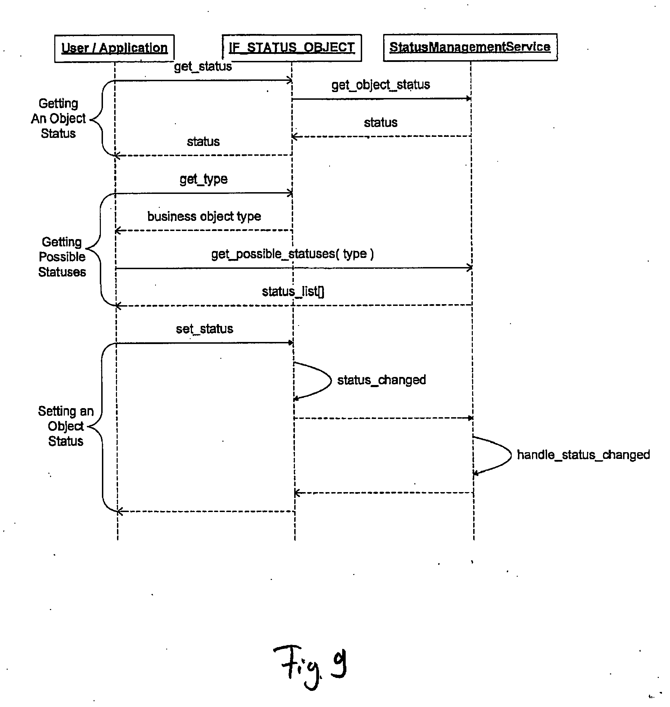

Fig. 9 shows a sequence diagram for changing a status during the lifecycle of the instantiated business object. The status of the instantiated foundation business object can be retrieved and/or changed by the user or an application. With each change the status management service ensures that dependent objects also have their status changed correspondingly in order to keep the data model synchronized with the database, if necessary.

After the actual status of the instantiated foundation business object has been obtained by calling the methods get status and get object status, the user or the application can obtain possible statuses to which the instantiated foundation business object can transition from its actual status by means of the method get type and get possible statuses. A status change can be performed by calling the method set status.

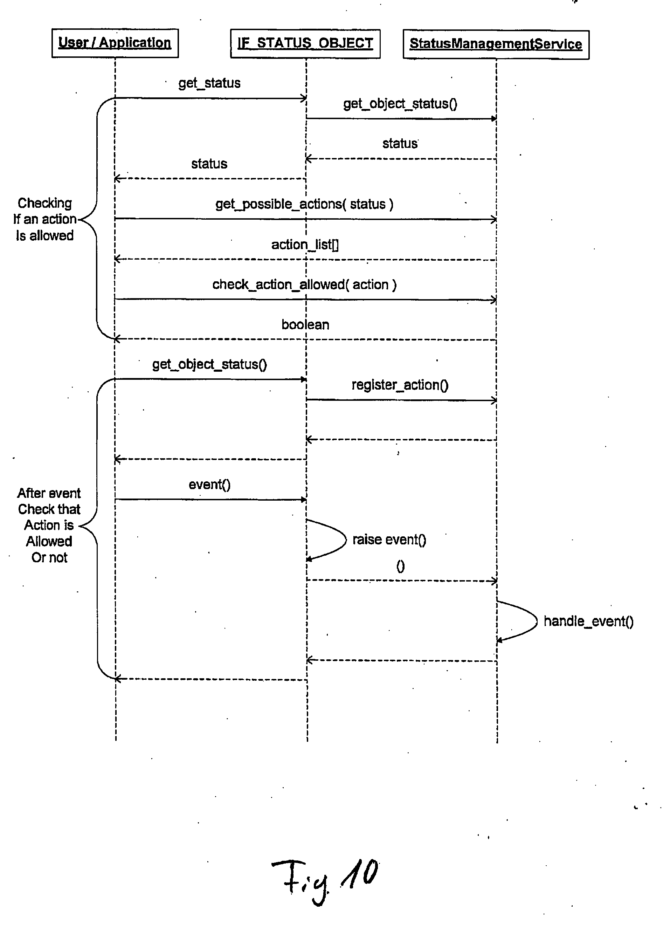

Fig. 10 shows a sequence diagram illustrating the interchange of messages and method calls for checking if an action is allowed. Checking if an action is allowed can be performed by calling the method get status, get object status, get possible actions (status) and check action allowed (action).

Alternatively or in addition such a check is performed after an event using the methods get object status, register action, event, raise event and handle event.

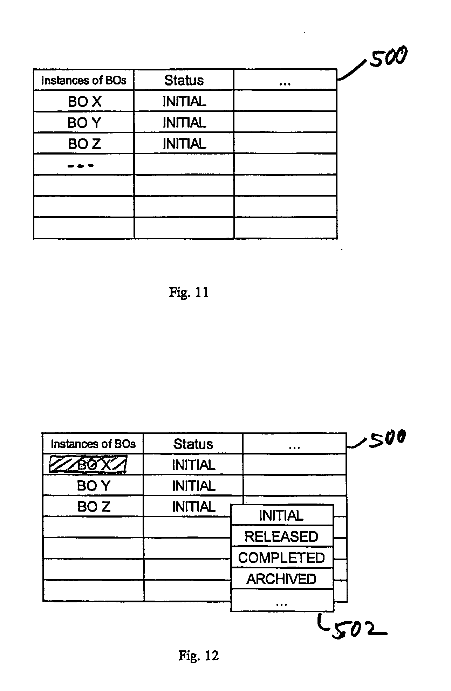

Fig. 11 schematically shows a window 500 of a user interface of the data processing system 100. For example, the window 500 is displayed on the screen of a personal computer 116 (cf. fig. 1). The window 500 shows the names of instantiated foundation business objects X, Y, Z,... and their respective statuses. The list of the instantiated foundation business objects can be structured hierarchically such as by means of an object tree. The status information shown in the window 500 can be obtained by means of the status management service provided by respective instantiated dependent business objects.

Fig. 12 shows a context menu 502 that is displayed in the window 500. The context menu 502 opens, e.g. by selecting one of the instances of the foundation business object shown in the window 500, and then performing an input action, such as clicking the right mouse button for invocation of the status management service. For example, the user has selected the instance BO X and has clicked on the right mouse button in order to open the context menu 502.

The context menu 502 shows the allowed statuses of the selected instance X in the correct order. As a consequence the user is informed regarding the allowed statuses of the instance X and the order in which the instance X can transition from one allowed status to another.

**List of Reference Numerals**

| | |
|---|---|
| 100 | Data processing system |
| 102 | Technology platform |
| 104 | Communication component |
| 106 | Business process modeling component |
| 108 | Application platform |
| 109 | Main memory |
| 110 | Database |
| 111 | Temporary status |
| 112 | Persistence table |
| 113 | Tables |
| 114 | User |
| 116 | Personal computer |
| 118 | User |
| 120-140 | Table |
| 500 | Window |
| 502 | Context menu |

## Claims

1. A data processing system having a service oriented architecture, the service oriented architecture comprising a plurality of foundation business objects and a dependent business object for providing a status management service for the plurality of foundation business objects.

2. The data processing system of claim 1, the foundation business objects having an interface to the dependent business object, the interface comprising a first set of methods.

3. The data processing system of claim 2, comprising processing means for instantiation of one of the plurality of foundation business objects and for instantiation of the dependent business object, the first set of methods comprising a first method for getting a status of the instantiated foundation business object from the instantiated dependent business object, a second method for setting the status of the instantiated foundation business object, and a third method for signaling that the status of the instantiated foundation business object has changed.

4. The data processing system of claim 3, the dependent business object comprising a second set of methods, the second set of methods comprising a first method for getting a default status of the instantiated foundation business object, a second method for getting the possible statuses of the instantiated foundation business object, a third method for getting the possible actions that can be performed on the instantiated foundation business object, a fourth method for checking if execution of a given action on the instantiated foundation business object is allowed, a fifth method for setting the status of the instantiated foundation business object, a sixth method for getting the status of the instantiated foundation business object, and a seventh method for saving the actual status of the instantiated foundation business object.

5. The data processing system of claim 1, further comprising a configuration component for configuration of the status management service, the configuration component storing first data descriptive of actions that can be performed on at least some of the foundation business objects.

6. The data processing system of claim 5, the configuration component storing second data descriptive of allowed statuses of at least some of the foundation business objects and allowed actions that are assigned to the allowed statuses.

7. The data processing system of claim 6, the second data being descriptive of an order of the statuses.

8. The data processing system of claim 7, the configuration component storing third data descriptive of the assignment of allowed statuses to business object types.

9. The data processing system of claim 5, the configuration component storing second data descriptive of statuses that can be taken by at least some of the foundation business objects, third data descriptive of business object types, fourth data descriptive of allowed statuses per business object type, and fifth data descriptive of allowed actions per status.

10. The data processing system of claim 5, the configuration component storing allowed statuses depending on business object keys.

11. The data processing system of claim 1, further comprising a main memory for storing a temporary status of an instantiated foundation business object and a database table for persistently storing the status of the instantiated foundation business object, wherein the temporary status is persistently stored in the database in response to a save command.

12. The data processing system of claim 5, further comprising at least one application program, the application program being adapted to obtain allowed actions that can be performed on an instantiated foundation business object from the configuration component.

13. The data processing system of claim 1, further comprising a user interface for displaying the statuses of instantiated foundation business objects.

14. The data processing system of claim 13, the user interface comprising a context menu for indicating allowed actions that can be performed on an instantiated foundation business object.

15. A data processing method for a service oriented architecture, the service oriented architecture comprising a plurality of foundation business objects and a dependent business object for providing a status management service for the plurality of foundation business objects, the method comprising:
- instantiation of one of the foundation business objects,
- initiation of the instantiation of the dependent business object by the instantiated one of the foundation business objects,
- receiving a status by the instantiated one of the foundation business objects from the instantiated dependent business object.

16. The data processing method of claim 15, further comprising getting allowed statuses from the instantiated dependent business object for the instantiated foundation business object, changing the status of the instantiated foundation business object to one of the allowed statuses.

17. The data processing method of claim 15, further comprising obtaining allowed actions that can be performed on the instantiated foundation business object from the instantiated dependent business object, and execution of one of the allowed actions by an application program.

18. The data processing method of claim 15, further comprising using the instantiated dependent business object for checking if an action to be performed on the instantiated foundation business object is allowed.

19. The data processing method of claim 15, further comprising temporarily storing an actual status of the instantiated foundation business object in a volatile memory, and persistently storing the actual status in a database in response to a save command.

20. A computer program product comprising executable instructions for performing a method of claim 15.
